# EUROPEAN PATENT SPECIFICATION

(11) **EP 1 838 510 B1**
(45) Date of publication and mention of the grant of the patent: **29.07.2009**
(21) Application number: 06707698.4
(22) Date of filing: 10.01.2006
(51) Int. Cl.: B29C 43/30, B29D 31/00, B29C 70/64, E04F 15/10, D06N 7/00, B29B 9/04

(54) **HOMOGENOUS SURFACE COVERING**
HOMOGENE OBERFLÄCHENBESCHICHTUNG
DECOR DE SURFACE HOMOGENE

(30) Priority: 10.01.2005 EP 05290054
(43) Date of publication of application: 03.10.2007
(73) Proprietor: Tarkett SAS, 92000 Nanterre (FR)
(72) Inventor: GUSTAFSSON, Peter, S-372 37 Ronneby (SE)
(74) Representative: Office Freylinger
(86) International application number: PCT/EP2006/050135
(87) International publication number: WO 2006/072638

(56) References cited:
- DE-A1- 4 340 478
- US-A- 2 962 081
- US-A- 2 995 179
- US-A1- 2001 005 542
- US-A1- 2001 023 999
- US-B1- 6 709 732
- PATENT ABSTRACTS OF JAPAN vol. 015, no. 025 (M-1071), 21 January 1991 (1991-01-21) & JP 02 269258 A (HIROSHIMA KASEI LTD), 2 November 1990 (1990-11-02)
- PATENT ABSTRACTS OF JAPAN vol. 012, no. 306 (C-522), 19 August 1988 (1988-08-19) & JP 63 077955 A (NICHIMAN RUBBER KOGYO KK), 8 April 1988 (1988-04-08)

## Description

### Field of the Invention

The invention relates to a homogenous surface covering.

### Description of the Related Art

Manufacturing of surface coverings by agglomerating polymer particles in a calender or a press is well known in the art. The agglomerated particles or (also called granulates or flakes) can be of various sizes, depending on the final products thickness. However, the ratio between length and height does usually not exceed 2 to 3 (R < 2-3).

This ratio R, also called aspect ratio or size ratio, is generally used in the art to define the overall shape of the particles or flakes. The height or thickness of such particles is generally determined by the thickness of the resulting surface covering. In practice, the flakes are usually between 2 and 4 mm in height. Large R-values will hence denote larger flat flakes, whereas R-values approaching 1 represent small compact granules.

The design that can be obtained by the traditional small flakes or granules is rather uniform since the pattern depends on the size of the flakes used to manufacture the surface covering. Using larger flakes, on the other hand, results in uneven surfaces, pinholes, etc.

To avoid such problems, US 2,962,081 describes an apparatus for producing decorative composition sheets, such as surface coverings for floors,
wherein a backweb is provided and first completely covered with fine particles, whereafter, in a second step, materially larger chips are randomly distributed on top of the fine particles. In a third step the particles and chips are consolidated with the backweb. The use of chips with a ratio R up to 100 is in fact possible only because these large chips are pressed into a bed of surrounding fine particles, whereby a smooth surface with a terrazzo effect can be obtained after pressing. The surface coverings, which may be manufactured by such an apparatus, are so-called heterogeneous surface coverings composed of (more or less well defined) "layers" of very distinctive composition.

The major disadvantages of such heterogeneous products are however their higher surface weight due to intrinsically greater thickness and hence higher manufacturing and shipping costs, as well as a lesser wear resistance in that the structure and the esthetical aspect of the product will change due to differential wear off during use.

Furthermore, for the known agglomerated products, the flakes are manufactured off-line and then stored in an intermediate bulk storage. Generally, the flakes are transported by a pneumatic transport system to a scattering device, which is situated at the beginning of the press or the calender. Pneumatic transport is however not possible for bigger flakes (R>7) because the pneumatic feeding lines clog up rather quickly. Furthermore, the scattering devices are not suitable for scattering bigger flakes regularly onto a surface.

So-called homogenous surface coverings are coverings with essentially homogenous composition throughout their entire thickness, the product having a similar aspect on its both sides. In such conditions, if the size of the flakes exceeds 10 mm an even surface cannot be obtained; the surface presents a large number of small holes (pin holes). Furthermore, pressures needed to obtain a correct surface are higher than 10 bars.

As an example, in US 2001/0023999 A1, (homogenous type) rubber-based coverings are produced by forming a substantially continuous bed of fragmented material and by subjecting the material to a compacting step. Typical granules used are however relatively small, such as disk-shaped pellets having a diameter of 4-6 mm and a thickness of the order of 0.5-1 mm, i.e. having aspect ratios R from 4-12, and the pressure values given range from about 20 to about 50 bars.

Accordingly, there is a need for a surface covering being produced by agglomerating flakes having a broader variety of surface designs.

### SUMMARY OF THE INVENTION

In accordance with the present invention, using a new process for producing a surface covering made by agglomerating flakes, a wider design variation can be created.

Accordingly the invention provides a new and improved process for producing homogenous type surface coverings comprising the following steps:
a) manufacturing a first sheet with an appropriate design, by mixing different colours and using both transparent and filled material,
b) cutting said sheet into flakes wherein at least 10 % of the flakes have a size ratio of R > 30,
c) scattering the flakes thus obtained on a surface without any intermediate storage and
d) pressing the flakes into a surface covering.

This process allows to obtain a surface covering having a much wider variety of surface design than the traditional type of homogenous surface coverings, while offering maximum wearing course and flexibility as compared to heterogeneous surface coverings. Furthermore, the depth of the design is greatly enhanced through the addition of both transparent and filled (coloured) materials.

If the sheet in step b) is cut in
b1) 10-90 % of flakes having a size ratio of R > 30 and
b2) 90-10 % of flakes having a size ratio R of less than 20, preferably of less than 10 and most preferably of between 2 and 5, than a even wider variability of the design is obtained.
   According to a preferred embodiment, flakes or powder having a diameter of less than 1.5 mm are added after scattering the flakes onto the surface and before pressing, i.e. between steps c) and d). This allows to obtain a very smooth surface and to further eliminate spots that may be formed when the big flakes are pressed in a double belt type press.
   Preferably, maximum 20% of such very small flakes are used. Instead of using small flakes or together with the use of small flakes, powder that has been obtained by sanding surface coverings may be used.
   The pressing of the flakes into a surface covering is executed preferably in a belt type press or in a double belt type press.
   In a process according to a further embodiment, a layer of between 0,1 mm and 0,4 mm is taken off the surface covering by sanding or by slicing to still further enhance the smoothness of the surface covering.
   Furthermore, the process may comprise the steps of finishing the surface covering in a traditional way. These steps depend on the final use for which the surface covering is destined and allow to further adapt durability properties, such as resistance to wear, to scratches, to stains and to chemicals, or to reduce maintenance, etc.
   The flakes and the resulting surface covering advantageously comprise PVC, PE, PP, lonomers or rubber material such as SBRS, HSR, NBR.
   Depending on the use of the surface covering, in particular for floor coverings for commercial use in high traffic areas, it may further comprise a top coating. This top coating preferably comprises a PU-dispersion, a PU-solution, a 2-components PU, a PU acrylate, an epoxy acrylate, a polyester acrylate, a polyether acrylate, a silicone acrylate or a mixture thereof.
   The top coating may comprise preferably an urethane derived polymer preferably polyurethane and most preferably a water based UV-curable PU-acrylate dispersion with a dry content of between 5% and 80% w/w, preferably between 20 and 60 % w/w. Such top coatings are widely used in the art for floor coverings.
   The top coating normally has a thickness of between 0,5 µm to 100 µm.
   The top coating may be applied by any known technique, like roller coating, reverse and inreverse, spraying, curtain, screen, etc.

### DETAILED DESCRIPTION OF A PREFERRED EMBODIMENTS

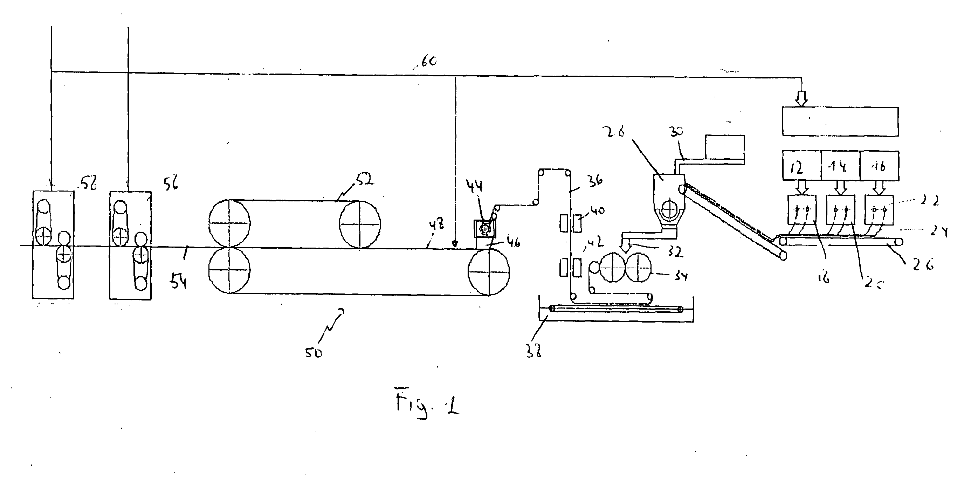

The present invention will be described in more detail in the following with reference to the enclosed figure 1, which represents a schematic view of the process.

Figure 1 represents a schematic view of the process according to a preferred embodiment of the invention.

Three different thermoplastic materials are dosed in a dosing equipment 12, 14, 16 and fed into an extruder 18, 20, 22 each and extruded. These thermoplastic materials are of different colours and/or of different physical properties. The extruded materials 24 are transported on a belt system 26 into a granulator 28 where they are granulated so as to form small flakes of about 2-20 mm. A fourth material 30 may optionally be added at that stage. The granulated material 32 optionally together with the fourth material is fed into a calender press 34 and is formed into a first sheet 36 of thermoplastic material. The first sheet 36 is cooled in a cooler 38 and then guided through to two different drying stations 40, 42 before it is fed into a flakes cutting device 44. The flakes cutting device 44 comprises a drum with cutting knives (not shown), which cut the sheet into flakes of different sizes. The flakes 46 are then spread evenly onto the lower belt 48 of a double belt press 50 and then pressed between the lower 48 and the upper belt 52 of the press 50 to form a second sheet 54. The second sheet 54 is fed into two subsequent sanding stations 56, 58 to smooth the surface of the sheet 54 and obtain a more regular design.

The sanding dust 60 may be fed into the extruder or at least part of it may be fed directly onto the lower belt 48 of the belt press 50 after the flakes 46 have been spread onto the lower belt 48.

### Examples

The following formulations have been used in a process as described above, wherein Formulation 1 and Formulation 2 (Alt.1-3 representing alternative compositions which may be used according to the invention, see Table 1 and 2 below) are extruded, then granulated so as to form small flakes of about 2-20 mm. The granulated materials of both Formulations 1 (37 weight-% of the flakes) and Formulation 2 (63 weight-% of the flakes) are fed into a calender press to manufacture a first sheet.

**Table 1: Formulation 1 (37 weight-% of the flakes)**

| | Alt.1 | Alt.2 | Alt.3 |
|---|---|---|---|
| S-PVC (Norvinyl S6260) | 42,4 % | 42,4 % | 41,7% |
| Plasticizer (DINP) | 12,7 % | 7,0 % | 25,0 % |
| Antistatic additive (Dehydat 3366) | 2,4 % | 2,4 % | 0,0 % |
| CaZn stabilizer (Bärostab MC8807-14CP) | 0,4 % | 0,4 % | 0,4 % |
| Epoxidized soy bean oil | 0,7 % | 0,7 % | 0,7 % |
| Lubricant (Paraloid K-125 ER) | 0,2 % | 0,2 % | 0,2 % |
| Filler (Myanit A20, Dolomite) | 39,2 % | 44,9 % | 30,0 % |
| Titanium dioxide + pigments | 2,0 % | 2,0 % | 2,0 % |

**Table 2: Formulation 2 (63 weight-% of the flakes)**

| | Alt.1 | Alt.2 | Alt.3 |
|---|---|---|---|
| S-PVC (Norvinyl S6260) | 72,7 % | 85,2 % | 67,6 % |
| Plasticizer (DINP) | 22,5 % | 10,0% | 30,0 % |
| Antistatic additive (Dehydat 3366) | 2,4 % | 2,4 % | 0,0 % |
| CaZn stabilizer (Bärostab MC8807-14CP) | 1,1 % | 1,1 % | 1,1 % |
| Epoxidized soy bean oil | 0,9 % | 0,9 % | 0,9 % |
| Lubricant (Paraloid K-125 ER) | 0,2 % | 0,2 % | 0,2 % |
| Pigments | 0,2 % | 0,2 % | 0,2 % |

This first sheet is then cooled and dried, before it is fed into a flakes cutting device. The cutting knives of this device cut the sheet into flakes of different sizes, e.g. into about 50 weight-% of flakes with R > 30 and about 50 weight-% of flakes with R < 20. The flakes are then spread evenly onto the lower belt of a double belt press, then pressed to form a second sheet.

This second sheet may further be smoothed in a sanding station to obtain an even more regular surface. Further to this step, a top coating, such as a polyurethane coating, has been applied to reinforce the surface and to reduce maintenance of the resulting flooring.

Different properties of resulting surface coverings have been evaluated according to known standards (see Table 3).

**Table 3: Technical specifications of a typical homogenous vinyl floor covering according to a preferred embodiment of the invention**

| Property | Standard | Value |
|---|---|---|
| Type of floor covering | EN 649 | Homogenous vinyl flooring |
| Classification | EN 685 | Commercial: 34 |
| | | Industrial: 43 |
| Wear layer thickness | EN 429 | 2.0 mm |
| Polyurethane reinforced | | Yes |
| Total thickness | EN 428 | 2.0 mm |
| Total weight/m² | EN 430 | 2690 g |
| Dimensional stability | EN 434 | < 0.40 % |
| Abrasion - Volume loss | EN 660: Part 2 | Class T |
| Residual indentation | EN 433 | Approx. 0.02 mm |
| Castors wheel test | EN 425 | Suitable |
| Static electrical charge | EN 1815 | < 2 kV |
| Impact sound reduction | EN ISO 717/2 | Approx. + 4 dB |
| Thermal resistance | DIN 52612 | 0.012 m² K/W |
| Reaction to fire | EN ISO 13501-1 | Class B_{fl} s1 |
| | EN ISO 9239-1 | > 8 kW/m² |
| | EN ISO 11925-2 | Pass |
| Chemical resistance | EN 423 | Good resistance |
| Slip resistance | DIN 51130 | R9 |
| | EN 13893 | > 0.3 |

## Claims

1. A process for producing homogenous type surface coverings comprising the following steps:
a) manufacturing a first sheet with an appropriate design,
b) cutting said sheet into flakes,
c) scattering the flakes thus obtained on a surface without any intermediate storage and
d) pressing the flakes into a surface covering,
**characterized in that** at least 10 % of the flakes have a size ratio (length/thickness) R > 30.

2. The process according to claim 1 wherein the sheet in step b) is cut in
b1) 10-90 % of flakes having a size ratio of R > 30 and
b2) 90-10 % of flakes having a size ratio R of less than 20, preferably of less than 10 and most preferably of between 2 and 5.

3. The process according to claim 1 or 2, wherein flakes or powder having a diameter of less than 1.5 mm are added after scattering the flakes onto the surface or backside of the flakes all before pressing.

4. The process according to claim 3, wherein at least 5% of flakes having a diameter of less than 1.5 mm are added.

5. The process according to any of the preceding claims, wherein a layer of between 0,1 mm and 0,4 mm is taken off the surface covering by sanding or by slicing.

6. The process according to any of the preceding claims, wherein the pressing of the flakes into a surface covering of step d) is executed in a belt type press.

7. The process according to any of the claims 1 to 5, wherein the pressing of the flakes into a surface covering of step d) is executed in a double belt type press.

8. The process according to any of the preceding claims, wherein the flakes comprise PVC, PE, PP, ionomers or rubbers like SBR, HSR or NBR.

9. The process according to any of the preceding claims, further comprising steps of finishing the surface covering in a traditional way.

10. The process according to claim 9, wherein the finishing steps comprise the application of a the top coating comprising a PU-dispersion, a PU-solution, a 2-components PU, a PU acrylate, an epoxy acrylate, a polyester acrylate, a polyether acrylate, a silicone acrylate or a mixture thereof.

11. The process according to claim 10, wherein the top coating comprises an urethane derived polymer, preferably polyurethane.

12. The process according to claims 10 or 11, wherein the top coating has a thickness of between 0,5 µm to 100 µm.

13. A homogenous surface covering comprising flates at least 10 % of which have a size ratio R > 30.

14. The surface covering according to claim 13, comprising 10-90 % of flakes having a size ratio of R > 30 and 90-10 % of flakes having a size ratio R of less than 20, preferably of less than 10 and most preferably of between 2 and 5.

15. The surface covering according to claim 13 or 14, wherein the flakes comprise PVC, PE, PP, ionomers or rubbers like SBR, HSR or NBR.

16. The surface covering according to any of claims 13 to 15, further comprising a top coating which comprises a PU-dispersion, a PU-solution, a 2-components PU, a PU acrylate, an epoxy acrylate, a polyester acrylate, a polyether acrylate, a silicone acrylate or a mixture thereof.

17. The surface covering according to claim 16, wherein the top coating comprises an urethane derived polymer, preferably polyurethane.

18. The surface covering according to claim 16 or 17, wherein the top coating has a thickness of between 0,5 µm to 100 µm.

19. The homogenous surface covering according to any of claims 13 to 18 obtained by means of a process according to any of claims 1 to 12.

## Patentansprüche

1. Verfahren zur Herstellung von Oberflächenbeschichtungen homogener Art, umfassend die folgenden Schritte:
a) Fertigen einer ersten Platte mit einem geeigneten Design,
b) Zerschneiden der Platte in Flocken,
c) Verstreuen der so erhaltenen Flocken auf einer Oberfläche ohne irgendeine Zwischenlagerung, und
d) Pressen der Flocken in eine Oberflächenbeschichtung,
**dadurch gekennzeichnet, dass** mindestens 10% der Flocken ein Größenverhältnis (Länge/Dicke) R > 30 aufweisen

2. Verfahren nach Anspruch 1, wobei die Platte in Schritt b) in Folgendes zerschnitten wird:
b1) 10-90% Flocken mit einem Größenverhältnis R > 30, und
b2) 90-10% Flocken mit einem Größenverhältnis R unter 20, vorzugsweise unter 10 und am meisten bevorzugt zwischen 2 und 5

3. Verfahren nach Anspruch 1 oder 2, wobei Flocken oder Pulver mit einem Durchmesser unter 1,5 mm nach dem Verstreuen der Flocken auf der Oberfläche oder Rückseite der Flocken ganz vor dem Pressen zugesetzt werden bzw. wird

4. Verfahren nach Anspruch 3, wobei mindestens 5% Flocken mit einem Durchmesser unter 1,5 mm zugesetzt werden

5. Verfahren nach irgendeinem der vorangehenden Ansprüche, wobei eine Schicht zwischen 0,1 mm und 0,4 mm durch Abschleifen oder durch Abschneiden von der Oberflächenbeschichtung abgetragen wird

6. Verfahren nach irgendeinem der vorangehenden Ansprüche, wobei das Pressen der Flocken in eine Oberflächenbeschichtung von Schritt d) in einer Bandpresse durchgeführt wird

7. Verfahren nach irgendeinem der Ansprüche 1 bis 5, wobei das Pressen der Flocken in eine Oberflächenbeschichtung von Schritt d) in einer Doppelbandpresse durchgeführt wird

8. Verfahren nach irgendeinem der vorangehenden Ansprüche, wobei die Flocken PVC, PE, PP, lonomere oder Kautschuke wie SBR, HSR oder NBR umfassen

9. Verfahren nach irgendeinem der vorangehenden Ansprüche, ferner umfassend Schritte zum Fertigbearbeiten der Oberflächenbeschichtung in herkömmlicher Weise.

10. Verfahren nach Anspruch 9, wobei die Fertigbearbeitungsschritte die Aufbringung einer Oberschicht umfassen, die eine PU-Dispersion, eine PU-Lösung, ein Zwei-Komponenten-PU, ein PU-Acrylat, ein Epoxyacrylat, ein Polyesteracrylat, ein Polyetheracrylat, ein Silikonacrylat oder eine Mischung davon umfasst

11. Verfahren nach Anspruch 10, wobei die Oberschicht ein von Urethan abgeleitetes Polymer, vorzugsweise Polyurethan, umfasst

12. Verfahren nach Anspruch 10 oder 11, wobei die Oberschicht eine Dicke zwischen 0,5 µm und 100 µm aufweist.

13. Homogene Oberflächenbeschichtung umfassend Flocken, von denen mindestens 10% ein Größenverhältnis R > 30 aufweisen

14. Oberflächenbeschichtung nach Anspruch 13, umfassend 10-90% Flocken mit einem Größenverhältnis R > 30 und 90-10% Flocken mit einem Größenverhältnis R unter 20, vorzugsweise unter 10 und am meisten bevorzugt zwischen 2 und 5

15. Oberflächenbeschichtung nach Anspruch 13 oder 14, wobei die Flocken PVC, PE, PP, lonomere oder Kautschuke wie SBR, HSR oder NBR umfassen.

16. Oberflächenbeschichtung nach irgendeinem der Ansprüche 13 bis 15, ferner umfassend eine Oberschicht, welche eine PU-Dispersion, eine PU-Lösung, ein Zwei-Komponenten-PU, ein PU-Acrylat, ein Epoxyacrylat, ein Polyesteracrylat, ein Polyetheracrylat, ein Silikonacrylat oder eine Mischung davon umfasst

17. Oberflächenbeschichtung nach Anspruch 16, wobei die Oberschicht ein von Urethan abgeleitetes Polymer, vorzugsweise Polyurethan, umfasst

18. Oberflächenbeschichtung nach Anspruch 16 oder 17, wobei die Oberschicht eine Dicke zwischen 0,5 µm und 100 µm aufweist

19. Homogene Oberflächenbeschichtung nach irgendeinem der Ansprüche 13 bis 18, erhalten mittels eines Verfahrens nach irgendeinem der Ansprüche 1 bis 12

## Revendications

1. Procédé de production de revêtements de surface de type homogène comprenant les étapes suivantes :
a) fabrication d'une première feuille ayant un design approprié,
b) découpage de ladite feuille en paillettes,
c) dispersion des paillettes ainsi obtenues sur une surface sans stockage intermédiaire, et
d) pressage des paillettes en un revêtement de surface,
**caractérisé en ce qu'**au moins 10% des paillettes ont un rapport de taille (hauteur/épaisseur) R > 30

2. Procédé selon la revendication 1, dans lequel la feuille de l'étape b) est découpée en
b1) 10 à 90 % de paillettes ayant un rapport de taille R > 30 et
b2) 90 à 10 % de paillettes ayant un rapport de taille R inférieur à 20, de préférence inférieur à 10 et de manière la plus préférée compris dans la plage allant de 2 à 5

3. Procédé selon la revendication 1 ou 2, dans lequel des paillettes ou de la poudre ayant un diamètre inférieur à 1,5 mm sont/est ajoutée(s) après la dispersion des paillettes sur la surface ou l'arrière des paillettes avant le pressage

4. Procédé selon la revendication 3, dans lequel au moins 5 % de paillettes ayant un diamètre inférieur à 1,5 mm sont ajoutés

5. Procédé selon l'une quelconque des revendications précédentes, dans lequel une couche comprise dans la plage allant de 0,1 à 0,4 mm est retirée du revêtement de surface par sablage ou par tranchage.

6. Procédé selon l'une quelconque des revendications précédentes, dans lequel le pressage des paillettes en un revêtement de surface de l'étape d) est réalisé dans une presse de type à bande

7. Procédé selon l'une quelconque des revendications 1 à 5, dans lequel le pressage des paillettes en un revêtement de surface de l'étape d) est réalisé dans une presse de type à double bande

8. Procédé selon l'une quelconque des revendications précédentes, dans lequel les paillettes comprennent un PVC, un PE, un PP, des ionomères ou des caoutchoucs tels que le SBR, le HSR ou le NBR

9. Procédé selon l'une quelconque des revendications précédentes, comprenant en outre des étapes de finition du revêtement de surface d'une manière classique.

10. Procédé selon la revendication 9, dans lequel les étapes de finition comprennent l'application d'une couche de finition comprenant une dispersion de PU, une solution de PU, un PU à 2 composants, un acrylate de PU, un acrylate d'époxy, un acrylate de polyester, un acrylate de polyéther, un acrylate de silicone ou un mélange de ceux-ci.

11. Procédé selon la revendication 10, dans lequel la couche de finition comprend un polymère dérivé de l'uréthane, de préférence un polyuréthanne

12. Procédé selon la revendication 10 ou 11, dans lequel la couche de finition a une épaisseur comprise dans la plage allant de 0,5 µm à 100 µm.

13. Revêtement de surface homogène comprenant des paillettes dont au moins 10 % ont un rapport de taille R > 30

14. Revêtement de surface selon la revendication 13, comprenant de 10 à à 90 % de paillettes ayant un rapport de taille R > 30 et de 90 à 10 % de paillettes ayant un rapport de taille R inférieur à 20, de préférence inférieur à 10 et de manière la plus préférée compris dans la plage allant de 2 à 5.

15. Revêtement de surface selon la revendication 13 ou 14, dans lequel les paillettes comprennent un PVC, un PE, un PP, des ionomères ou des caoutchoucs tels que le SBR, le HSR ou le NBR

16. Revêtement de surface selon l'une quelconque des revendications 13 à 15, comprenant en outre une couche de finition qui comprend une dispersion de PU, une solution de PU, un PU à 2 composants, un acrylate de PU, un acrylate d'époxy, un acrylate de polyester, un acrylate de polyéther, un acrylate de silicone ou un mélange de ceux-ci

17. Revêtement de surface selon la revendication 16, dans lequel la couche de finition comprend un polymère dérivé de l'uréthane, de préférence un polyuréthane.

18. Revêtement de surface selon la revendication 16 ou 17, dans lequel la couche de finition a une épaisseur comprise dans la plage allant de 0,5 µm à 100 µm.

19. Revêtement de surface homogène selon l'une quelconque des revendications 13 à 18, obtenu au moyen d'un procédé selon l'une quelconque des revendications 1 à 12.
